# EUROPÄISCHE PATENTSCHRIFT

(11) **EP 2 363 254 B1**
(45) Veröffentlichungstag und Bekanntmachung des Hinweises auf die Patenterteilung: **04.09.2013**
(21) Anmeldenummer: 10194174.8
(22) Anmeldetag: 08.12.2010
(51) Int. Cl.: B25J 15/04

(54) **Koppelvorrichtung für mindestens ein Werkzeug eines Handhabungssystems der Lebensmittelindustrie**
Coupling device for at least one tool of a handling system for the food industry
Dispositif de couplage pour au moins un outil de système de manipulation de l'industrie alimentaire

(30) Priorität: 01.03.2010 DE 102010000598
(43) Veröffentlichungstag der Anmeldung: 07.09.2011
(73) Patentinhaber: Krones AG, 93073 Neutraubling (DE)
(72) Erfinder: Linner, Johann, 83253 Rimsting (DE); Ettenhuber, Klaus, 83135 Schechen (DE); Hertel, Florian, 83064 Raubling (DE); Köhl, Bernd, 83059 Kolbermoor (DE)
(74) Vertreter: Reichert, Sabine

(56) Entgegenhaltungen:
- EP-A1- 1 935 580
- DE-A1- 3 151 532
- DE-A1- 3 517 460
- DE-U1- 8 703 091

## Beschreibung

Die vorliegende Erfindung betrifft eine Koppelvorrichtung für ein Werkzeug eines Handhabungssystems der Lebensmittelindustrie.

Im Besonderen umfasst die Koppelvorrichtung mindestens ein Werkzeug, das an einem Träger lösbar befestigbar ist. Der Träger weist mindestens eine Koppelplatte zur Aufnahme einer Werkzeugträgerplatte auf. Über mindestens ein erstes Greifmittel und mindestens ein zweites Greifmittel, die beide gegenüberliegend angeordnet und gegenläufig beweglich sind, kann die Werkzeugträgerplatte gegriffen oder gelöst werden. In der gegriffenen Stellung liegt die Werkzeugträgerplatte flächig an der Koppelplatte an.

Mit den Handhabungssystemen, die Packmaschinen sein können, wie sie in den Prospekten der Krones AG zu Lina-Pac II und Smart-Pac beschrieben sind, werden verschiedene Flaschentypen mit der Packmaschine in Kartons oder Kästen verpackt. Um einen anderen Flaschentyp zu verpacken, müssen bestimmte an die Flasche angepasste Formatteile gewechselt werden. Zum Wechsel gehört u. a. auch der Tausch der entsprechenden Werkzeuge bzw. Garnituren.

Die unveröffentlichte deutsche Patentanmeldung DE 10 2009 003 516.8 offenbart eine automatische Greiferkopplung. Die automatische Greiferkopplung umfasst eine Andruckplatte zur Aufnahme eines beliebigen Greifers mittels einer Tragplatte und mindestens einer ersten Klemmbacke und einer zweiten Klemmbacke. Die beiden Klemmbacken sind gegenüberliegend und beweglich angeordnet, um ein Klemmen der Tragplatte zu erreichen. Der Andruckplatte ist eine pneumatische Hebelmechanik zugeordnet, die die Klemmbacken aufeinander zu bewegt, um die Tragplatte zu klemmen oder die die Klemmbacken voneinander entfernt, um die Tragplatte zu lösen. Mittels der pneumatischen Hebelmechanik wurde ein Totpunkt überschritten, welcher zu einer Selbstsicherung der Klemmung führen sollte. Um eine sichere Klemmung zu erreichen, ist es erforderlich, dass die Pneumatikzylinder derart groß dimensioniert sind, dass eine ausreichende Kraft gewährleistet ist, um dem Totpunkt des Mechanismus zu überschreiten.

Ferner wurde bei Packmaschinen des Standes der Technik die Klemmung über Spannklauen, welche mit einer Spindel verbunden sind, realisiert. Die Spindel weist ein Rechts- und Linksgewinde auf, so dass sich bei einer Spindeldrehung die Klauen aufeinander zu oder voneinander weg bewegen. Die Drehung der Spindel wurde von Hand ausgeführt. Ein automatisches Wechseln der Greiferköpfe ist somit nicht gegeben.

Die deutsche Offenlegungsschrift DE 40 03 201 A1 offenbart eine Schnellkupplungsvorrichtung für Schmiede- und Transportmanipulatoren. Um nicht Werkzeuge, z. B. Zangen, mitsamt ihrem Antrieb wechseln zu müssen, ist eine Schnellkupplungsvorrichtung zwischen einem Werkzeugträger und dem Werkzeug vorgesehen. Die Schnellkupplungsvorrichtung besteht im Wesentlichen aus zwei Kupplungshalbschalen, von denen die eine an einer im Werkzeugträger gelagerten und bei Bedarf antreibbaren Drehspindel und die andere im Werkzeugkopf fest angebracht ist, welche radial miteinander gekuppelt und verriegelt werden. Die Verriegelungseinrichtung ist so ausgebildet, dass im entriegelten Zustand der Drehantrieb der Drehspindel gesperrt ist. Die Schnellkupplungsvorrichtung erlaubt auch einen Linearantrieb zum Öffnen und Schließen von Zangen oder dergleichen und ist in der Lage, hohe Biege- und/oder Drehmomente bei gleichzeitig hohen Quer- und Längskräften zu übertragen.

Die deutsche Offenlegungsschrift DE 37 13 619 A1 offenbart eine Greiferwechselkupplung für Handhabungsgeräte. Die Greiferwechselkupplung besteht aus einem Greiferwechselkopf und einer Adapterplatte. Zwei im Abstand zueinander aus der Adapterplatte vorspringende Zentrierzapfen ragen in zwei Zentrieröffnungen des Greiferwechselkopfes und werden dort durch eine im Greiferwechselkopf quer verschiebbar geführte Riegelplatte verriegelt. Sie weist zwei Aushebungen auf, die mit ihren Rändern bei einer Querverschiebung der Riegelplatte in seitliche Hinterschneidungen der Zentrierzapfen verriegelt eingreifen.

Die deutsche Offenlegungsschrift DE 10 2005 031 803 A1 offenbart einen Werkzeugwechsler. Der Werkzeugwechsler ist im Besonderen für HSK-Werkzeuge geeignet und mit einem Greifer versehen, der einwärts gerichtete Greiffortsätze aufweist, die zum Eingreifen in axial gerichtete Ausrichtvertiefungen eines Werkzeugs geeignet sind. Dadurch werden Werkzeuge sicher gehalten.

Die Übersetzung der europäischen Patentschrift DE 691 04 917 T2 offenbart eine Greiferwechselvorrichtung für Roboter. Die Greiferwechselvorrichtung für einen Roboter besteht aus einem Grundkörper mit einem Zylinderabschnitt, mit dem ein Kolben hin- und herbewegt wird. Eine Greifer-platte ist lösbar an der Stirnwand des Grundkörpers befestigt. Wenigstens ein erster Schwenkzapfen, der an einem Tragblock gehalten ist, steht in Querrichtung hinsichtlich der Achse der Kolbenstange hervor. Der besagte Tragblock ist am äußeren Ende der Kolbenstange befestigt. Das Klemmteil weist einen Abschnitt auf, der zum Tragabschnitt vorsteht, um daran anzustoßen und um ein Wegbewegen der Greiferplatte im Falle eines Druckverlustes zu vermeiden. Der besagte Eingreifabschnitt ist an einem radial außen liegenden Endabschnitt eines jeden Klemmteils ausgebildet. Der zweite Schwenkzapfen ist parallel zum ersten Schwenkzapfen vor jedem Klemmteil angeordnet, um das Klemmteil in die andere der besagten Bohrungen des jeweiligen Gelenkteils anzukoppeln.

Das U.S.-Patent US 5,466,025 offenbart Klemmbacken für die Befestigung eines Austauschbauteils. Das hierzu erforderliche Interface umfasst einen sich verjüngenden Körper, der V-förmig ausgebildet ist, um somit für die Klemmung V-förmige Oberflächen zur Verfügung zu stellen. Das Interface besitzt ebenfalls einen Befestigungsmechanismus, der dazu verwendet wird, das Bauteil lösbar am Interface zu befestigen. Für die Befestigung sind entsprechende Betätigungsmittel vorgesehen, die die Klemmung bewirken bzw. die Klemmung des Bauteils lösen.

Die deutsche Offenlegungsschrift DE 10 2007 016 300 A1 offenbart einen elektrisch betätigbaren Werkzeugwechsler für einen Roboter. Der Werkzeugwechsler umfasst erste und zweite Einheiten, die funktionsfähig sind, um separat an einem Roboter und einem Roboterwerkzeug angebracht zu werden und die weiter funktionsfähig sind, um selektiv zusammengekoppelt und entkoppelt zu werden. Die ersten und zweiten Einheiten werden durch einen Elektromotor gekoppelt und entkoppelt. Die Kraft des Elektromotors kann aufgebracht werden, um die ersten und zweiten Einheiten in einer Vielzahl von Varianten zu koppeln und zu entkoppeln.

Aufgabe der Erfindung ist, eine Koppelvorrichtung für ein Werkzeug eines Handhabungssystems der Lebensmittelindustrie zu schaffen, mit der automatisch Werkzeuge gewechselt werden können. Ferner soll sichergestellt sein, dass die Werkzeuge sicher während des Betriebs am Träger des Handhabungssystems befestigt bleiben.

Die obige Aufgabe wird durch eine Koppelvorrichtung für mindestens eine Werkzeugträgerplatte mindestens eines Werkzeugs eines Handhabungssystems der Lebensmittelindustrie gelöst, die die Merkmale des Anspruchs 1 umfasst.

Gemäß der erfindungsgemäßen Ausgestaltung der Koppelvorrichtung für Handhabungssysteme der Lebensmittelindustrie besitzt diese mindestens eine Werkzeugträgerplatte für mindestens ein Werkzeug, die an einem Träger lösbar befestigbar ist. Der Träger besitzt mindestens eine Koppelplatte zur Aufnahme der Werkzeugträgerplatte. Mit einem ersten Greifmittel und einem zweiten Greifmittel, die beide gegenüberliegend angeordnet und gegenläufig beweglich sind, kann die Werkzeugträgerplatte gegriffen und an der Koppelplatte gehaltert oder von der Koppelplatte gelöst werden. In der gegriffenen Stellung liegt die Werkzeugträgerplatte flächig an der Koppelplatte an. Wenn die Werkzeugträgerplatte flächig an der Koppelplatte anliegt, wird diese form- und kraftschlüssig von den beiden Greifmitteln gehaltert.

Für das automatische Koppeln bzw. Lösen der Werkzeugträgerplatte ist ein Motor vorgesehen, der über eine Welle und ein Getriebe das erste und das zweite Greifmittel bewegt. Dem Getriebe ist ein Mittel zum Abschalten des Motors zugeordnet. Der Motor, welcher die beiden Klemmbacken zum Klemmen bewegt, wird dann abgeschaltet, wenn durch das erste und das zweite Greifmittel ein vordefiniertes Drehmoment, welches aufgrund des form- und kraftschlüssigen Halterns der Werkzeugträgerplatte entsteht, erreicht wird.

Das Getriebe ist als Schneckenradgetriebe ausgebildet. Das Schneckenradgetriebe besteht aus einem um eine Spindel drehbaren Schneckenrad und einer Schnecke. Die Schnecke sitzt auf einer Welle und ist in axialer Richtung der Welle beweglich ausgebildet.

Das Mittel zum Abschalten des Motors ist als ein elastisches Element ausgebildet. Die Vorspannung des elastischen Mittels und die auf der Welle sitzende Schnecke wirken in axialer Richtung der Welle zusammen. Am elastischen Element ist eine Schaltfahne befestigt, die mit einem Näherungsschalter nach einer vordefinierten Verformung des elastischen Elements in axialer Richtung der Welle zusammenwirkt. Durch das Zusammenwirken der Schaltfahne und des Näherungsschalters wird ein Schaltsignal ausgelöst.

Bevorzugter Weise ist das elastische Element als eine Spiralfeder oder eine Tellerfeder oder ein Elastomer ausgebildet. Es ist für einen Fachmann selbstverständlich, dass das elastische Element aus verschiedensten Materialien und Formen gebildet sein kann. Die einzige Bedingung ist, dass die Relativverformung in axialer Richtung der Welle erfolgt. Das elastische Element ist bevorzugter Weise derart ausgebildet, dass es die Welle umschließt.

Wenn die Werkzeugträgerplatte durch die Bewegung der beiden Greifmittel über die Koppelplatte am Träger befestigt wird, steigt das Drehmoment, welches auf das Getriebe wirkt, allmählich an. Ist das elastische Element vorgespannt, bewegt sich beim Erreichen eines vordefinierten Drehmoments die Schnecke des Getriebes in axialer Richtung auf der Welle. Die Bewegung der Schnecke in axialer Richtung wird durch die Drehbewegung des Motors und der Zusammenwirkung zwischen Schneckenrad und Schnecke und der Hemmung der Spindel, die das Schneckenrad trägt, verursacht. Die Bewegung der Schnecke erfolgt um eine vordefinierte Wegstrecke, so dass der Motor durch das Zusammenwirken der Schaltfahne und des Näherungsschalters, wodurch das Schaltsignal bewirkt wird, abgeschaltet wird. Je nach Position des Näherungsschalters kann sich die Schaltfahne vom Näherungsschalter wegbewegen oder auf den Näherungsschalter zubewegen. Bewegt sich die Schaltfahne vom Näherungsschalter weg, wird bei der Unterbrechung des Kontakts das Schaltsignal ausgelöst. Bewegt sich die Schaltfahne gemäß einer anderen Ausführungsform der Erfindung auf den Näherungsschalter zu, wird beim Schließen des Kontakts ein Schaltsignal ausgelöst.

Über die Position des Näherungsschalters kann die Wegstrecke der Verformung des elastischen Elements verändert werden, so dass das Drehmoment, welches zur Abschaltung des Motors führt, eingestellt werden kann. Ebenso kann über die Vorspannung des elastischen Elements das für die Abschaltung des Motors erforderliche Drehmoment eingestellt werden.

Das Getriebe und das Mittel zum Abschalten des Motors sind dabei in einem Gehäuse untergebracht.

Gemäß einer Ausführungsform der Erfindung sind am Träger bis zu drei Befestigungspositionen vorgesehen, an denen eine Werkzeugträgerplatte für mehrere Werkzeuge befestigbar ist.

Jeder Befestigungsposition sind ein Getriebe und ein Mittel zum Abschalten des Motors zugeordnet. Die Welle, die die Drehbewegung des Motors auf das Getriebe überträgt, verläuft dabei durch die Gehäuse.

Jedes Mittel zum Abschalten des Motors, welches zum Greifen der Werkzeugträgerplatte vorgesehen ist, ist derart mit dem Motor verbunden, dass die Abschaltung des Motors beim Zusammenwirken aller Schaltfahnen und der jeweils zugeordneten Näherungsschalter eines jeden Getriebes zum Bewegen der Greifmittel zur Aufnahme der Werkzeugträgerplatte bewirkbar ist.

Das Getriebe kann mit einem Wegerfassungssystem (Drehgeber oder Ähnliches dem Fachmann bekanntes Mittel zur Ermittlung eines zurückgelegten Weges) versehen sein, so dass beim Lösen der Werkzeugträgerplatte nach einer vordefinierten Anzahl von Drehstrecken des Getriebes der Motor abgeschaltet wird.

Die Erfindung der Koppelvorrichtung, die z.B. bei einer Packmaschine oder einem Palettierroboter eingesetzt werden kann, mit der automatischen Koppelung mindestens eines Werkzeugs über die mindestens eine Werkzeugträgerplatte an einen Träger beruht auf dem Prinzip, dass ein Drehmoment über eine Radialkraft bestimmt ist. Diese Kraft steigt mit dem anliegenden steigenden Drehmoment an. Die Kraft kann anhand des elastischen Elements in eine Strecke umgewandelt und dadurch gemessen werden. Das elastische Element kann als Hooke'sche Feder oder auch als progressive Feder ausgebildet sein. Durch die eingestellte Vorspannung des elastischen Elements kann auch dessen zurückgelegter Weg eingestellt werden.

Auf die drehende Spindel, welche das Öffnen oder Schließen der Greifmittel bewirkt, ist ein Schneckenradgetriebe gesetzt. Das Schneckenrad wirkt mit einer Schnecke zusammen, die auf der Welle sitzt. Durch den Motor wird die Welle angetrieben, welche folglich die Schnecke bewegt. Die Schnecke erfährt durch das steigende Drehmoment der Spindel eine Axialkraft. Die Bewegung der Schnecke wird bei herkömmlichen Getrieben über eine Wellenlagerung verhindert.

Bei der erfindungsgemäßen Anordnung wird die Schnecke axial beweglich auf der Welle befestigt und mit einem elastischen Element an der Bewegung in der axialen Richtung beim Schließen der Greifmittel gehemmt. Mit steigendem Drehmoment steigt die Radialkraft (Federkraft) an. Als Folge daraus bewegt sich die Schnecke in axialer Richtung der Welle. Somit kann über die Federstrecke das Drehmoment gemessen bzw. bestimmt werden. Die Messung erfolgt jedoch bei der erfindungsgemäßen Koppelvorrichtung lediglich über eine Schaltfahne und einen Näherungsschalter, so dass bei einem bestimmten Federweg durch das Zusammenwirken der Schaltfahne und des Näherungsschalters ein Schaltsignal ausgelöst wird. Der Federweg (somit das Drehmoment) kann über die Position des Näherungsschalters eingestellt werden. Beim Öffnen der Greifmittel fährt die Schnecke gegen Anschlag, wie dies bei einem herkömmlichen Schneckenradgetriebe der Fall ist.

Bei der Anwendung muss nur ein bestimmtes Drehmoment erreicht werden. Es erfolgt keine tatsächliche Drehmoment-Messung, sondern es wird lediglich ein Schaltsignal erzeugt. Das Schaltsignal, welches aufgrund des Zusammenwirkens der Schaltfahne und des Näherungsschalters gebildet wird, bedeutet, dass das Drehmoment für das form- und kraftschlüssige Halten der mindestens einen Werkzeugträgerplatte erreicht ist. Entsprechend der Anzahl der Koppelplatten bei der Koppelvorrichtung sind auch einzelne Getriebe vorgesehen. Mit einem einzigen Motor werden die Getriebe über eine Welle angetrieben.

Die Synchronisierung der einzelnen Getriebe ist aufgrund von Fertigungstoleranzen in den Koppelplatten und/oder der Werkzeugträgerplatte problematisch. Mit dem elastischen Element kann man zusätzlich Toleranzen ausgleichen. Ebenso ist es mit der gegenwärtigen Erfindung möglich unterschiedliche Gewichtsverlagerungen auszugleichen, die innerhalb der Handhabungsvorrichtung am Träger für das mindestens eine Werkzeug auftreten.

Gemäß der Erfindung dreht der Motor so lange beim Schließen der Greifmittel, bis alle Positionen, an denen die mindestens eine Werkzeugträgerplatte gegriffen werden soll, ein entsprechendes Schaltsignal ausgeben. Die Ausgabe des Schaltsignals bedeutet, dass das "Mindestdrehmoment" erreicht ist. Dies bedeutet natürlich auch, dass an einigen Positionen, an denen die Werkzeugträgerplatten befestigt sind, ein höheres Drehmoment vorliegt. Dennoch kann man sicher sein, dass an allen Stellen, an denen die Werkzeugträgerplatte befestigt ist, das Mindestdrehmoment für eine sichere Befestigung der Werkzeugträgerplatte am Träger und unter Zusammenwirkung mit der Koppelplatte erreicht ist.

Nachdem von allen Näherungsschaltern das Schaltsignal ausgelöst worden ist, stoppt der Motor und die Greifmittel sind geschlossen. Dadurch ist erreicht, dass die mindestens eine Werkzeugträgerplatte sicher am Träger befestigt ist. Die Greifmittel sind bevorzugt in Form von Klauen ausgebildet.

Im Folgenden sollen Ausführungsbeispiele die Erfindung und ihre Vorteile anhand der beigefügten Figuren näher erläutern.
- Figur 1: zeigt eine Vorderansicht einer Koppelvorrichtung (als Packmaschine ausgebildet), wie sie im Stand der Technik Verwendung findet.
- Figur 2: zeigt eine Seitenansicht der Befestigung der mindestens einer Werkzeugträgerplatte mittels der beiden Greifmittel, wobei die Halterung der Werkzeugträgerplatte an der Koppelplatte durch einen Motor bewirkt wird.

- Figur 3: zeigt eine Detailansicht des Getriebes und des Mittels zum Abschalten des Motors, der die Greifmittel antreibt.
- Figur 4: zeigt eine Detailansicht des Trägers der Koppelvorrichtung, wobei am Träger drei Getriebe und somit drei Befestigungspositionen, an denen jeweils die mindestens eine Werkzeugträgerplatte befestigt wird, vorgesehen sind.

Die nachfolgende Beschreibung bezieht sich auf eine Koppelvorrichtung, bei der an einem Träger mindestens ein Werkzeug über mindestens eine Werkzeugträgerplatte lösbar befestigbar ist. Es ist für einen Fachmann selbstverständlich, dass die Erfindung überall dort Anwendung finden kann, wo ein Drehmoment begrenzt, überprüft oder gemessen werden soll und dass aufgrund dieser Messung eine Aktion ausgelöst werden kann. Mit der hier vorgeschlagenen Erfindung soll es somit möglich sein, auf einfache, schnelle und sichere Weise die Umrüstung z.B. einer Packmaschine oder eines Palettierroboters zu gewährleisten. Ferner sei darauf hingewiesen, dass in den verschiedenen Figuren für gleiche Elemente oder gleich wirkende Elemente das gleiche Bezugszeichen verwendet wird.

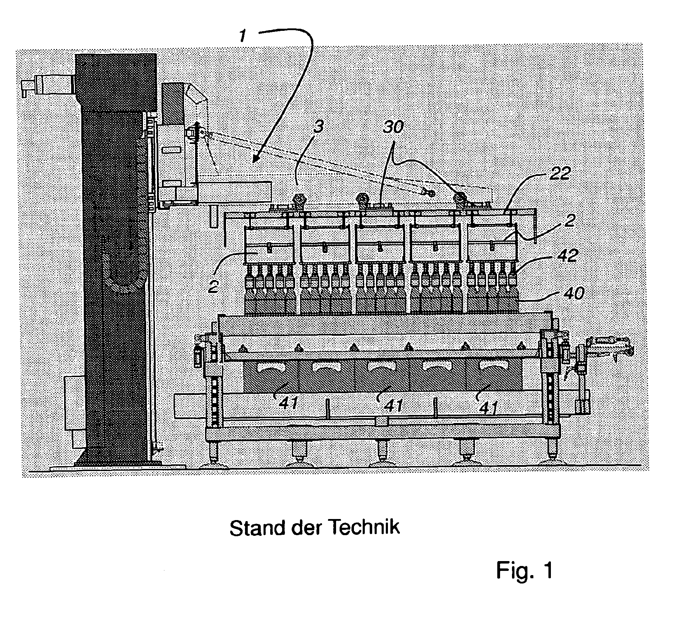

**Figur 1** zeigt eine Koppelvorrichtung in einer Packmaschine, wobei die Packmaschine schon länger aus dem Stand der Technik bekannt ist. Die Packmaschine dient zum Einpacken, Auspacken, Sortieren und Ausrichten von Artikeln 40. Die Packmaschine übernimmt verschiedene Pack-Aufgaben und verarbeitet eine Fülle von Artikeltypen. Die Packmaschine arbeitet taktweise. Beim Einpacken werden die Artikel 40 mit Packköpfen 42 aufgenommen und in die dafür vorgesehenen Behälter 41 abgesetzt. Um die verschiedenen Artikel 40 verpacken zu können, müssen die Garnituren, die als Werkzeuge 2 bezeichnet werden, gewechselt werden. Die Werkzeuge 2 werden an einer entsprechenden Werkzeugträgerplatte 22 gehaltert.

Wie bereits bei der Formulierung der Aufgabe der gegenwärtigen Erfindung erwähnt, soll der Wechsel der mindestens einen Werkzeugträgerplatte 22 für die Wechsel der verschiedenen Werkzeuge 2 bzw. Garnituren automatisch erfolgen, so dass die mindestens eine Werkzeugträgerplatte 22 und somit auch die Werkzeuge 2 sicher und schnell am Träger 3 der Packmaschine befestigt werden können.

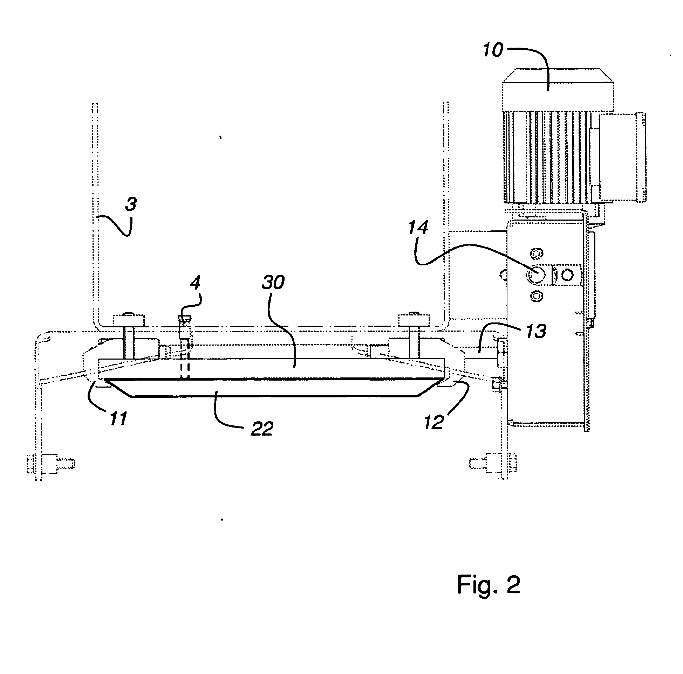

**Figur 2** zeigt eine schematische Seitenansicht der Befestigung mindestens einer Werkzeugträgerplatte 22 am Träger 3 einer Koppelvorrichtung 1. Zur Befestigung der mindestens einen Werkzeugträgerplatte 22 sind ein erstes Greifmittel 11 und ein zweites Greifmittel 12 vorgesehen. Das erste Greifmittel 11 und das zweite Greifmittel 12 sind gegenüberliegend angeordnet und gegenläufig beweglich ausgebildet. In der in **Figur 2** gezeigten Ausführungsform kann die Bewegung des ersten Greifmittels 11 und des zweiten Greifmittels 12 mittels einer Spindel 13 bewirkt werden. Die Spindel 13 wird über einen Motor 10 in eine Drehbewegung versetzt, um letztendlich die Bewegung auf das erste Greifmittel 11 und das zweite Greifmittel 12 zu übertragen. Im form-und kraftschlüssig gehalterten Zustand liegt die mindestens eine Werkzeugträgerplatte 22 vollständig an einer Koppelplatte 30 an. Mit einem Sensor 4 kann zusätzlich überprüft werden, ob die Werkzeugträgerplatte 22 an der Koppelplatte 30 des Trägers 3 anliegt.

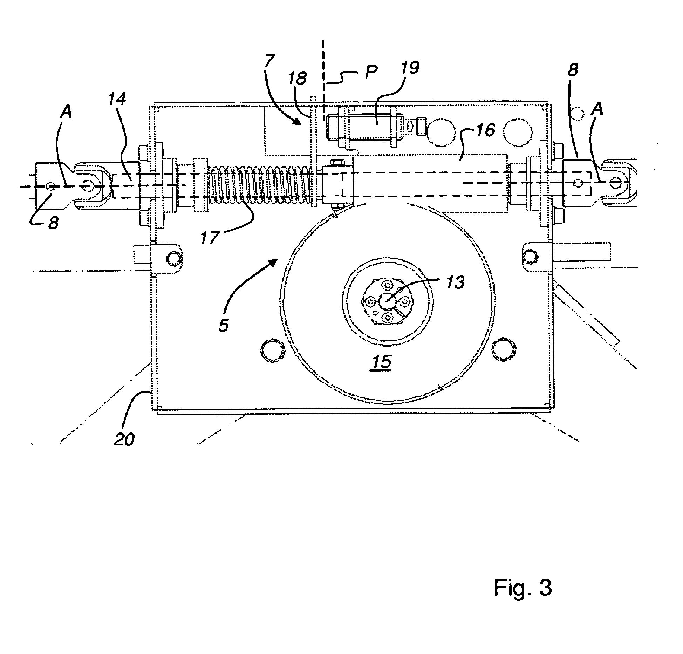

**Figur 3** zeigt eine Detailansicht des Zusammenwirkens der Welle 14 mit einem Getriebe 5, um das erste Greifmittel 11 und das zweite Greifmittel 12 in die entsprechende Bewegung zum Haltern und/oder Lösen der mindestens einen Werkzeugträgerplatte 22 zu bewegen. Wie bereits in der Beschreibung zu **Figur 2** erwähnt, wird die Welle 14 über den Motor 10 und das mindestens eine Getriebe 5 in eine Drehbewegung versetzt. Dem Getriebe 5 ist ferner ein Mittel 7 zum Abschalten des Motors 10 zugeordnet. Das Abschalten des Motors 10 soll dann erfolgen, wenn durch das erste Greifmittel 11 und das zweite Greifmittel 12 ein vordefiniertes Drehmoment beim form- und kraftschlüssigen Haltern der mindestens einen Werkzeugträgerplatte 22 erreicht ist. Das Mittel 7 zum Abschalten des Motors 10 ist dabei derart ausgestaltet, dass beim Erreichen des vordefinierten Drehmoments ein Schaltsignal ausgegeben wird. Dieses Schaltsignal veranlasst den Motor 10 zu der erfindungsgemäßen Abschaltung.

Das Getriebe 5 ist als ein Schneckengetriebe ausgebildet. Das Schneckengetriebe besteht aus einem Schneckenrad 15 das auf der Spindel 13 sitzt und einer Schnecke 16. Die Schnecke 16 ist dabei derart auf der Welle 14 angeordnet, dass sie in axialer Richtung A der Welle 14 beweglich ausgebildet ist. Die Schnecke 16 überträgt die Drehbewegung der Welle 14 auf das Schneckenrad 15. Über das Schneckenrad 15 wird das erste Greifmittel 11 und das zweite Greifmittel 12 in die für die Aufnahme oder Halterung erforderliche bzw. für das Lösen der mindestens einen Werkzeugträgerplatte 22 erforderliche Bewegung versetzt. Das Mittel 7 zum Abschalten des Motors 10 ist als ein elastisches Element 17 (hier als Spiralfeder dargestellt) ausgebildet. Ferner umfasst das Mittel 7 zum Abschalten des Motors 10 einen Näherungsschalter 19, der mit einer Schaltfahne 18 zusammenwirkt, die mit dem elastischen Element 17 verbunden ist. Nach einer vordefinierten Bewegung des elastischen Elements 17 kommt die Schaltfahne 18 in Berührung oder räumliche Beziehung mit dem Näherungsschalter 19, wobei bei der Berührung zwischen Schaltfahne 18 und Näherungsschalter 19 ein Schaltsignal ausgelöst wird. Dieses Schaltsignal wird für die Abschaltung des Motors 10 verwendet. Die Verformung (Ausdehnung oder Stauchung) des elastischen Elements 17 erfolgt in axialer Richtung A der Welle 14. Das elastische Element 17 wirkt auf die Schnecke 16, so dass ein Erreichen des vordefinierten Drehmoments die Verformung des elastischen Elements 17 zu einer Relativbewegung derselben führt.

Gemäß der in **Figur 3** gezeigten Ausführungsform bewegt sich die Schaltfahne 18 vom Näherungsschalter 19 weg. Diese Bewegung führt zum Erzeugen des Schalsignals da der Kontakt der Schaltfahne 18 und des Näherungsschalters 19 unterbrochen ist. Durch die so erzielte räumliche Beziehung zwischen der Schaltfahne 18 und dem Näherungsschalter 19 erlischt das vorhandene Schaltsignal. Dieses Erlöschen des Signals wird wiederum dahingehend interpretiert, dass das Drehmoment erreicht ist, um eine sichere Halterung der mindestens einen Werkzeugträgerplatte 22 zu gewährleisten. Bevorzugter Weise ist das elastische Element 17 als eine Spiralfeder ausgebildet. Die Spiralfeder umgibt dabei die Welle 14. Für einen Fachmann ist es selbstverständlich, dass die Verwendung einer Spiralfeder als elastisches Element 17 nicht als eine Beschränkung der Erfindung aufgefasst werden kann. Als elastisches Element 17 sind viele Möglichkeiten denkbar, die eine entsprechende axiale Verformung und somit Kraft in Richtung der Welle 14 ausüben können.

Gemäß der anderen Ausführungsform (nicht dargestellt) bewegt sich die Schaltfahne 18 in Richtung des Näherungsschalters 19 und führt somit zum Erzeugen eines Schaltsignals. Hierbei wäre bezogen auf die in **Figur 3** gezeigte Darstellung der Näherungsschalter 19 spiegelbildlich gegenüberliegend der Schaltfahne 18 angeordnet.

Über die Position P des Näherungsschalters 19 und/oder die Vorspannung des elastischen Elements 17, kann die Wegstrecke S eingestellt werden, die das elastische Element 17 mit der befestigten Schaltfahne 18 durch die Verformung des elastischen Elements 17 zurücklegen muss, um die Abschaltung des Motors 10 zu bewirken. Je größer die Wegstrecke S ist, desto größer muss das vordefinierte Drehmoment sein, damit es zu einer Abschaltung des Motors 10 kommt.

Das Getriebe 5 und das Mittel 7 zum Abschalten des Motors 10 sind in einem Gehäuse 20 untergebracht. Falls mehr als eine Befestigungsposition 25 vorgesehen ist, an der die mindestens eine Werkzeugträgerplatte 22 am Träger 3 angebracht ist, ist jeder Befestigungsposition 25 für die Werkzeugträgerplatte 22 am Träger ein Gehäuse 20 mit dem Getriebe 5 und dem Mittel 7 zum Abschalten des Motors 10 zugeordnet. Die Vielzahl der Getriebe 5 wird mittels eines einzigen Motors 10 angetrieben. Hierzu verläuft die Welle 14 vom Motor 10 durch die jeweiligen Gehäuse 20, um somit die Bewegung des Motors 10 auf die einzelnen Getriebe 5 zu übertragen. Die Welle 14 selbst hat mehrere Gelenke 8, um somit eine mögliche Verkantung innerhalb der Welle auszugleichen.

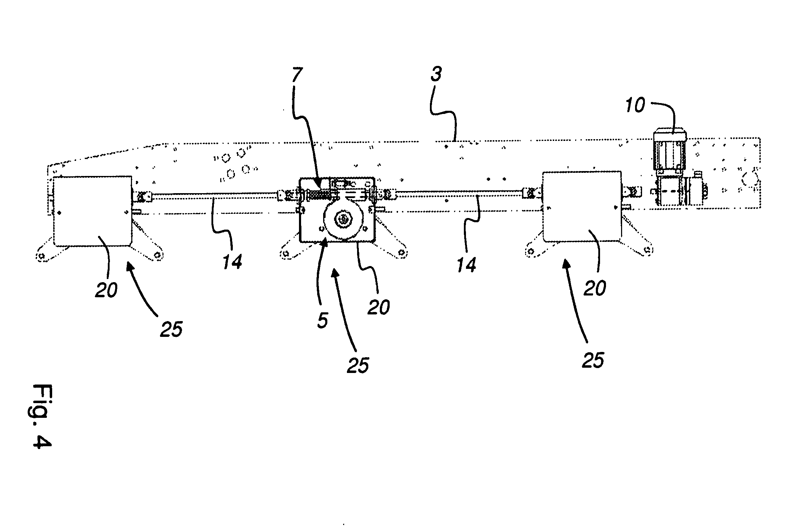

**Figur 4** zeigt eine Ausführungsform der erfindungsgemäßen Koppelvorrichtung 1, bei der am Träger 3 jeweils drei Einheiten aus einem Getriebe 5 und einem Mittel 7 zum Abschalten des Motors 10 angebracht sind. Wie bereits in der Beschreibung zu **Figur 3** erwähnt, verläuft die Welle 14 zum Antrieb der einzelnen Getriebe 5 durch jedes der Gehäuse 20, in denen das Getriebe 5 und die Mittel 7 zum Abschalten des Motors 10 untergebracht sind. Der Motor 10 wird nur dann abgeschaltet, wenn jedes Mittel 7 zum Abschalten des Motors 10 ein Schaltsignal erzeugt hat. Aufgrund von Fertigungstoleranzen wird es immer so sein, dass das vordefinierte Drehmoment nicht bei allen der drei Mittel zum Abschalten des Motors 10 zum gleichen Zeitpunkt erreicht ist. Es kommt somit vor, dass die mindestens eine Werkzeugträgerplatte 22 an einer der Befestigungspositionen 25 stärker geklemmt wird, als vom vordefinierten Drehmoment erforderlich. Durch die Bedingung, dass der Motor 10 nur dann abgeschaltet wird, wenn von allen Mitteln 7 zum Abschalten des Motors 10 ein entsprechendes Schaltsignal abgegeben wird. Dies führt dazu, dass auch bei dem letzten der hier angeordneten drei Einrichtungen das vordefinierte Mindestdrehmoment erreicht sein muss, dass die Abschaltung des Motors 10 bewirkt wird. Auf diese Weise kann man die Fertigungstoleranzen eliminieren und sicherstellen, dass auf alle Fälle eine sichere Halterung der mindestens einen Werkzeugträgerplatte 22 an jeder Befestigungsposition 25 gewährleistet ist.

Die Erfindung wurde unter Bezugnahme auf bevorzugte Ausführungsbeispiele beschrieben. Es ist für einen Fachmann selbstverständlich, dass Änderungen und Abwandlungen der Erfindung durchgeführt werden können, ohne dabei den Schutzbereich der nachstehenden Ansprüche zu verlassen.

### Bezugszeichenliste:

- (1): Koppelvorrichtung
- (2): Werkzeug
- (3): Träger
- (4): Sensor
- (5): Getriebe
- (7): Mittel zum Abschalten des Motors
- (8): Gelenk
- (10): Motor
- (11): erstes Greifmittel
- (12): zweites Greifmittel
- (13): Spindel
- (14): Welle
- (15): Schneckenrad
- (16): Schnecke
- (17): elastisches Element
- (18): Schaltfahne
- (19): Näherungsschalter
- (20): Gehäuse

- (22): Werkzeugträgerplatte
- (25): Befestigungsposition
- (30): Koppelplatte
- (40): Artikel
- (41): Behälter
- (42): Packköpfe
- (A): axiale Richtung
- (P): Position des Näherungsschalters

## Patentansprüche

1. Koppelvorrichtung (1) für mindestens ein Werkzeug (2) eines Handhabungssystems der Lebensmittelindustrie, das an einem Träger (3) lösbar befestigbar ist, wobei der Träger (3) mindestens eine Koppelplatte (30) zur Aufnahme mindestens einer Werkzeugträgerplatte (22) des mindestens einen Werkzeugs (2) aufweist,
wobei mindestens ein erstes Greifmittel (11) und mindestens ein zweites Greifmittel (12) gegenüberliegend angeordnet und gegenläufig beweglich sind, um die mindestens eine Werkzeugträgerplatte (22) zu greifen oder zu lösen,
wobei in der gegriffenen Stellung die mindestens eine Werkzeugträgerplatte(22) flächig an der Koppelplatte (30) anliegt und form- und kraftschlüssig gehaltert ist,
wobei ein Motor (10) vorgesehen ist, der über eine Welle (14) und ein Getriebe (5) das
erste und das zweite Greifmittel (11, 12) bewegt, und
wobei dem Getriebe (5) ein Mittel (7) zum Abschalten des Motors (10) zugeordnet
ist, wenn beim Greifen und Haltern der mindestens einen Werkzeugträgerplatte (22) durch das erste und das zweite Greifmittel (11, 12) ein vordefiniertes Drehmoment erreicht ist.

2. Koppelvorrichtung (1) nach Anspruch 1, wobei das Getriebe (5) ein Schneckenradgetriebe ist, das ein auf einer Spindel (13) sitzendes Schneckenrad (15) und eine auf der Welle (14) sitzende und in axialer Richtung (A) der Welle (14) bewegliche Schnecke (16) umfasst.

3. Koppelvorrichtung (1) nach einem der voranstehenden Ansprüche, wobei das Mittel (7) zum Abschalten des Motors (10) ein elastisches Element (17) aufweist, das in axialer Richtung (A) der Welle (14) wirkt, wobei eine Schaltfahne (18) am elastischen Element (17) befestigt ist, die mit einem Näherungsschalter (19) nach einer vordefinierten Verformung des elastischen Elements (17) in axialer Richtung (A) der Welle (14) zusammenwirkt und ein Schaltsignal auslöst.

4. Koppelvorrichtung (1) nach Anspruch 3, wobei das elastische Element (17) eine Spiralfeder oder eine Tellerfeder oder ein elastischer Kunststoff ist.

5. Koppelvorrichtung (1) nach einem der Ansprüche 3 oder 4, wobei beim Erreichen des vordefinierten Drehmoments durch das form- und kraftschlüssige Halten der mindestens einen Werkzeugträgerplatte (22) mittels des ersten und des zweiten Greifmittel (11, 12) sich die Schnecke (16) in axialer Richtung (A) um eine vordefinierte Wegstrecke bewegt und wobei mittels einer Verformung des elastischen Elements (17) ebenfalls eine Bewegung in axialer Richtung (A) bewirkbar ist, so dass der Motor (10) durch das Zusammenwirken der Schaltfahne (18) und des Näherungsschalters (19) abschaltbar ist.

6. Koppelvorrichtung (1) nach Anspruch 5, wobei über eine Position (P) des Näherungsschalters (19) und die Verformung des elastischen Elements (17) das vordefinierte Drehmoment zur Abschaltung des Motors (10) einstellbar ist.

7. Koppelvorrichtung (1) nach Anspruch 5, wobei über die Vorspannung des elastischen Elements (17) das vordefinierte Drehmoment einstellbar ist.

8. Koppelvorrichtung (1) nach einem der Ansprüche 1 bis 7, wobei das Getriebe (5) und das Mittel (7) zum Abschalten des Motors (10) in einem Gehäuse (20) untergebracht sind.

9. Koppelvorrichtung (1) nach einem der Ansprüche 1 bis 8, wobei der Träger (3) bis zu drei Befestigungspostionen (25) trägt, an denen die mindestens eine Werkzeugträgerplatte (22) befestigbar ist.

10. Koppelvorrichtung (1) nach Anspruch 9, wobei jeder Befestigungsposition (25) ein Getriebe (5) und ein Mittel (7) zum Abschalten des Motors (10) zugeordnet sind und die Welle (14) die Drehbewegung des Motors (10) auf die Getriebe (5) überträgt.

11. Koppelvorrichtung (1) nach einem der Ansprüche 9 bis 10, wobei jedes Getriebe (5) und jedes Mittel (7) zum Abschalten des Motors (10) in einem Gehäuse (20) untergebracht sind und die Welle (14) durch die Gehäuse (20) verläuft.

12. Koppelvorrichtung (1) nach einem der Ansprüche 9 bis 11, wobei jedes Mittel (7) zum Abschalten des Motors (10) eines jeden Werkzeugs (2) derart mit dem Motor (10) verbunden ist, dass die Abschaltung des Motors (10) beim Zusammenwirken aller Schaltfahnen (18) und der jeweils zugeordneten Näherungsschalter (19) einer jeden Befestigungsposition (25) der mindestens einen Werkzeugträgerplatte (22) bewirkbar ist.

13. Koppelvorrichtung (1) nach den Ansprüchen 1 bis 12, wobei das Getriebe (5) mit einem Encoder (25) versehen ist, so dass beim Lösen der mindestens einen Werkzeugträgerplatte (22) der Motor (10) nach einer vordefinierten Anzahl von Drehschritten des Getriebes (5) abschaltbar ist.

14. Koppelvorrichtung nach einem der Ansprüche 1 bis 13, wobei das Handhabungssystem eine Packmaschine ist.

15. Koppelvorrichtung nach einem der Ansprüche 1 bis 13, wobei das Handhabungssystem ein Palettierroboter ist.

## Claims

1. A coupling device (1) for at least one tool (2) of a handling system of the food industry, which can be releasably fixed to a carrier (3), wherein the carrier (3) has at least one coupling plate (30) for receiving at least one tool carrier plate (22) of the at least one tool (2),
wherein at least one first gripping means (11) and at least one second gripping means (12) are arranged opposite to each other and can move against each other in order to grip or release the at least one tool carrier plate (22), wherein, in the gripped position, the at least one tool carrier plate (22) lies planarly on the coupling plate (30) and is held in a form-fitting and force-locking manner,
wherein a motor (10) is provided for, which moves the first and the second gripping means (11, 12) by means of a shaft (14) and a gear transmission (5), and
wherein a means (7) for switching off the motor (10) is assigned to the gear transmission (5) if, when gripping and holding the at least one tool carrier plate (22) by the first and second gripping means (11, 12), a predefined torque is reached.

2. The coupling device (1) according to claim 1, wherein the gear transmission (5) is a worm gear transmission which comprises a worm wheel (15) sitting on a spindle (13) and a worm (16) which sits on the shaft (14) and can be moved in an axial direction (A) on the shaft (14).

3. The coupling device (1) according to any one of the preceding claims, wherein the means (7) for switching off the motor (10) has an elastic element (17) which acts in an axial direction (A) of the shaft (14), wherein a switching flag (18) is fastened to the elastic element (17) which cooperates with a proximity switch (19) after a predefined deformation of the elastic element (17) in an axial direction (A) of the shaft (14), and emits a switching signal.

4. The coupling device (1) according to claim 3, wherein the elastic element (17) is a coil spring or a disk spring or an elastic plastics material.

5. The coupling device (1) according to any one of the claims 3 or 4, wherein, upon reaching a predefined torque by the form-fitting and force-locking holding of the at least one tool carrier plate (22) by means of the first and the second gripping means (11, 12), the worm (16) moves in an axial direction (A) along a pre-defined distance travelled and wherein a movement in the axial direction (A) can also be effected by means of a deformation of the elastic element (17), so that the motor (10) can be switched off by the cooperation of the switching flag (18) and the proximity switch (19).

6. The coupling device (1) according to claim 5, wherein the pre-defined torque for switching off the motor (10) can be adjusted via a position (P) of the proximity switch (19) and deformation of the elastic element (17).

7. The coupling device (1) according to claim 5, wherein the predefined torque can be adjusted via the pretension of the elastic element (17).

8. The coupling device (1) according to any one of the claims 1 to 7, wherein the gear transmission (5) and the means (7) for switching off the motor (10) are accommodated in a housing (20).

9. The coupling device (1) according to any one of the claims 1 to 8, wherein the carrier (3) carries up to three fixing positions (25) at which the at least one tool carrier plate (22) can be fixed.

10. The coupling device (1) according to claim 9, wherein each fixing position (25) is assigned to a gear transmission (5) and a means (7) for switching off the motor (10) and the shaft (14) transmits the rotary movement of the motor (10) to the gear transmission (5).

11. The coupling device (1) according to any one of the claims 9 to 10, wherein each gear transmission (5) and each means (7) for switching off the motor (10) are accommodated in a housing (20) and the shaft (14) runs through the housing (20).

12. The coupling device (1) according to any one of the claims 9 to 11, wherein every means (7) for switching off the motor (10) of each tool (2) is connected with the motor (10) in such a way that switching off of the motor (10) can be effected through the cooperation of all switching flags (18) and the respectively assigned proximity switches (19) of each fastening position (25) of the at least one tool carrier plate (22).

13. The coupling device (1) according to the claims 1 to 12, wherein the gear transmission (5) is fitted with an encoder (25), so that the motor (10) can be switched off after a pre-defined number of rotary steps of the gear transmission (5) upon releasing of the at least one one tool carrier plate (22).

14. The coupling device according to any one of the claims 1 to 13, wherein the handling system is a packing machine.

15. The coupling device according to any one of the claims 1 to 13, wherein the handling system is a palletizing robot.

## Revendications

1. Dispositif d'accouplement (1) pour au moins un outil (2) d'un système de manutention de l'industrie agroalimentaire qui peut être fixé de manière détachable sur un support (3), étant donné que le support (3) présente au moins une plaque d'accouplement (30) pour le logement d'au moins une plaque support d'outil (22) du au moins un outil (2),
étant donné qu'au moins un premier moyen de préhension (11) et au moins un deuxième moyen de préhension (12) sont disposés l'un en face de l'autre et se déplacent de manière antagoniste afin de saisir ou de relâcher la au moins une plaque support d'outil (22), étant donné que, à la position saisie, la au moins une plaque support d'outil (22) est couchée de manière planaire sur la plaque d'accouplement (30) et retenue par complémentarité de forme et par adhérence,
étant donné qu'est prévu un moteur (10) qui meut via un arbre (14) et un réducteur (5) le premier et le deuxième moyen de préhension (11, 12), et étant donné que le réducteur (5) est affecté à un moyen (7) destiné à arrêter le moteur (10) lorsque, lors de la préhension et la retenue de la au moins une plaque support d'outil (22) par le premier et le deuxième moyen de préhension (11, 12), un couple de rotation prédéfini est atteint.

2. Dispositif d'accouplement (1) selon la revendication 1, étant donné que le réducteur (5) est un engrenage à vis sans fin qui comprend une roue à vis sans fin (15) logée sur une broche (13) et une vis sans fin (16) logée sur l'arbre (14) et mobile dans le sens axial (A) de l'arbre (14).

3. Dispositif d'accouplement (1) selon l'une quelconque des revendications précédentes, étant donné que le moyen (7) d'arrêt du moteur (10) présente un élément élastique (17) qui agit dans le sens axial (A) de l'arbre (14), étant donné qu'un drapeau de commutation (18) est fixé sur l'élément élastique (17), drapeau qui coopère avec un détecteur de proximité (19) après une déformation prédéfinie de l'élément élastique (17) dans le sens axial (A) de l'arbre (14) et déclenche un signal de commutation.

4. Dispositif d'accouplement (1) selon la revendication 3, étant donné que l'élément élastique (17) est un ressort hélicoïdal ou un ressort à disque ou une matière plastique élastique.

5. Dispositif d'accouplement (1) selon l'une quelconque des revendications 3 ou 4, étant donné que, lorsque le couple de rotation prédéfini est atteint par la retenue par complémentarité de forme et par adhérence de la au moins une plaque support d'outil (22) au moyen du premier et du deuxième moyen de préhension (11, 12), la vis sans fin (16) se déplace d'un trajet prédéfini dans le sens axial (A) et étant donné qu'au moyen d'une déformation de l'élément élastique (17), un mouvement peut également être provoqué dans le sens axial (A), de manière à ce que le moteur (10) peut être arrêté sous l'effet de la coopération du drapeau de commutation (18) et du détecteur de proximité (19).

6. Dispositif d'accouplement (1) selon la revendication 5, étant donné que le couple de rotation prédéfini pour l'arrêt du moteur (10) peut être réglé au moyen d'une position (P) du détecteur de proximité (19) et de la déformation de l'élément élastique (17).

7. Dispositif d'accouplement (1) selon la revendication 5, étant donné que le couple de rotation prédéfini peut être réglé au moyen de la précontrainte de l'élément élastique (17).

8. Dispositif d'accouplement (1) selon l'une quelconque des revendications 1 à 7, étant donné que le réducteur (5) et le moyen (7) d'arrêt du moteur (10) sont logés dans un boîtier (20).

9. Dispositif d'accouplement (1) selon l'une quelconque des revendications 1 à 8, étant donné que le support (3) porte jusqu'à trois positions de fixation (25) auxquelles la au moins une plaque support d'outil (22) peut être fixée.

10. Dispositif d'accouplement (1) selon la revendication 9, étant donné que chaque position de fixation (25) est affectée à un réducteur (5) et un moyen (7) d'arrêt du moteur (10) et l'arbre (14) transmet le mouvement rotatif du moteur (10) au réducteur (5).

11. Dispositif d'accouplement (1) selon l'une quelconque des revendications 9 à 10, étant donné que chaque réducteur (5) et chaque moyen (7) d'arrêt du moteur (10) sont logés dans un boîtier (20) et l'arbre (14) court à travers le boîtier (20).

12. Dispositif d'accouplement (1) selon l'une quelconque des revendications 9 à 11, étant donné que chaque moyen (7) d'arrêt du moteur (10) de chaque outil (2) est relié au moteur (10) de manière à ce que l'arrêt du moteur (10) puisse être provoqué en cas de coopération de tous les drapeaux de commutation (18) avec les détecteurs de proximité (19), qui leur sont respectivement affectés, de chaque position de fixation (25) de la au moins une plaque support d'outil (22).

13. Dispositif d'accouplement (1) selon les revendications 1 à 12, étant donné que le réducteur (5) est doté d'un encodeur (25) de manière à ce que, en cas de détachement de la au moins une plaque support d'outil (22), le moteur (10) puisse être arrêté après un nombre prédéfini de pas de rotation du réducteur (5).

14. Dispositif d'accouplement selon l'une quelconque des revendications 1 à 13, étant donné que le système de manutention est une machine d'emballage.

15. Dispositif d'accouplement selon l'une quelconque des revendications 1 à 13, étant donné que le système de manutention est un robot de palettisation.
